# EUROPÄISCHE PATENTSCHRIFT

(11) **EP 1 232 195 B1**
(45) Veröffentlichungstag und Bekanntmachung des Hinweises auf die Patenterteilung: **28.12.2005**
(21) Anmeldenummer: 00969361.5
(22) Anmeldetag: 29.09.2000
(51) Int. Cl.: C08G 12/40, C08G 14/12, C04B 24/22

(54) **LAGERSTABILE SULFONIERTE KONDENSATIONSPRODUKTE, VERFAHREN ZU IHRER HERSTELLUNG UND DEREN VERWENDUNG**
SULFONATED CONDENSATION PRODUCTS WHICH ARE STABILE IN STORAGE, METHOD FOR THE PRODUCTION THEREOF, AND THEIR USE
PRODUITS DE CONDENSATION SULFONES STABLES AU STOCKAGE, LEUR PROCEDE DE PREPARATION ET LEUR UTILISATION

(30) Priorität: 29.09.1999 DE 19946591
(43) Veröffentlichungstag der Anmeldung: 21.08.2002
(73) Patentinhaber: Degussa Construction Polymers GmbH, 83308 Trostberg (DE)
(72) Erfinder: HOLLAND, Uwe, 83361 Kienberg (DE); MATZINGER, Martin, 83308 Trostberg (DE); PLANK, Johann, 83308 Trostberg (DE)
(74) Vertreter: Weiss, Wolfgang
(86) Internationale Anmeldenummer: PCT/EP2000/009587
(87) Internationale Veröffentlichungsnummer: WO 2001/023450

(56) Entgegenhaltungen:
- EP-A- 0 238 930
- EP-A- 0 690 083
- WO-A-96/34027
- DE-A- 2 159 737
- GB-A- 595 366
- GB-A- 893 901
- DATABASE WPI Section Ch, Week 199532 Derwent Publications Ltd., London, GB; Class A21, AN 1995-241149 XP002158452 & CN 1 088 592 A (UNIV HUANAN SCI & ENG), 29. Juni 1994 (1994-06-29)
- PATENT ABSTRACTS OF JAPAN vol. 1995, no. 02, 31. März 1995 (1995-03-31) & JP 06 305797 A (NIPPON STEEL CHEM CO LTD), 1. November 1994 (1994-11-01)

## Beschreibung

Gegenstand der vorliegenden Erfindung sind lagerstabile sulfonierte Kondensationsprodukte, Verfahren zu ihrer Herstellung und deren Verwendung.

Es ist hinlänglich bekannt, dass hydraulisch abbindende Bindemittel wie Zement, Kalk, Gips, CaSO₄-Halbhydrat und Anhydrite durch den Zusatz von Dispergiermitteln verflüssigt werden können, wodurch wunschgemäß niedrige Wasser/Bindemittel-Verhältnisse eingestellt werden können. Klassische Dispergiermittel, die seit über 20 Jahren zum Einsatz kommen, sind Melamin-Formaldehyd-Sulfit (MSF)-Harze und Naphthalinsulfonsäure-Formaldehyd (NSF)-Harze, die in den letzten Jahren kontinuierlich weiterentwickelt wurden, um so den gestiegenen Erwartungen gerecht zu werden.

So beschreibt DE 195 38 821 kostengünstige MFS-Harze mit einem hohen Anteil an Sulfit. Gemäß EP 690 083 wird eine Kostenreduktion durch den teilweisen Ersatz von Melamin durch Harnstoff in einem 2-stufigen Prozeß und unter Zugabe von Co-Reaktanden wie Aminosulfonsäuren, Aminocarbonsäuren und Caprolactam etc. erzielt, wobei dieser Vorteil durch einen Oxidationsschritt des überschüssigen Sulfits allerdings teilweise wieder aufgehoben wird.

WO 96/34027 offenbart Produkte, die durch Reaktion von sulfonierten Aminoharzen mit Aminogruppen-enthaltenden Substanzen, wie z.B. Melamin oder/und Harnstoff, hergestellt werden.

EP 0 238 930 beschreibt Sulfonsäuregruppen-enthaltende Melamin-Formaldehyd-Kondensationsprodukte. Bei deren Herstellung werden Carbonsäureamide zugesetzt, die an der Kondensationsreaktion teilnehmen.

Gängig ist auch die Zugabe von Sulfanilsäure, wie bspw. in DE 44 11 797 oder in DE 196 09 614 offenbart, wobei in diesem Fall die Sulfanilsäure noch durch Polyoxyalkylen-Derivate und/oder Aldehydsäure-Derivate ergänzt wird.

All diesen Kondensationsprodukten ist jedoch als Nachteil gemeinsam, dass bei der Sprühtrocknung von wässrigen Lösungen herkömmlicher Fließmittel die speziell für die Anwendung im CaSO₄-Bereich wichtige Frühfestigkeitsentwicklung durch die hohe thermische Belastung bei der Trocknung äußerst negativ beeinflußt wird.

Der vorliegenden Erfindung lag daher die Aufgabe zugrunde, lagerstabile sulfonierte Kondensationsprodukte auf Basis eines Aminoplastbildners mit mindestens zwei Aminogruppen und Sulfit und/oder Naphthalinsulfonsäure sowie Formaldehyd zu entwickeln, die als Zusatzmittel für hydraulisch abbindende Zusatzmittel den genannten Nachteil der thermischen Veränderung nicht zeigen, sondern über einen weiten Temperaturbereich stabil sind.

Diese Aufgabe wird erfindungsgemäß durch sulfonierte Kondensationsprodukte auf Basis eines Aminoplastbildners mit mindestens zwei Aminogruppen und Sulfit und/oder Naphthalinsulfonsäure sowie Formaldehyd und ggf. organischen Stickstoffbasen, wobei der Aminoplastbildner ausgewählt ist aus Melamin und/oder Harnstoff und gegebenenfalls bis zu 70 Gew.-% durch Thioharnstoff, Dicyandiamid, eine Guanidin(-Salz) und Mischungen daraus ersetzt wird,
dadurch gekennzeichnet,
dass sie mindestens ein stickstoffhaltiges Formulierungshilfsmittel ausgewählt aus Verbindungen der allgemeinen Formel (I)

R¹-NH-X-Y-R²

worin
- R¹ =: -CH₃, -C₂H₅, -C₃H₇,
- R² =: H, -CH₃, -C₂H₅, -C₃H₇ oder
- R¹ und R²: gemeinsam -(CH₂)ₙ-CH₂-
- X =: -CH₂-, CO, CS
- Y =: S, NH, -(CH₂)ₘ-
- n =: 0 bis 9
- m =: 1 bis 4 ist;
und/oder Verbindungen der allgemeinen Formel (II) 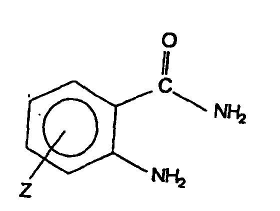 worin
- Z =: -OCH₃, -SO₃H, -SO₃^{-M+}, -NO₂, -NH₂, -NH-NH₂, -CO₂^{-M+}, -CHO, H,
- M =: Kation ist
enthalten und dass das Mol-Verhälnis von Aminoplastbildner: Formaldehyd:Sulfit:stickstoffhaltigem Formulierungshilfsmittel 1:1,9 bis 6,0:1,0 bis 2,0:0,01 bis 1,5 und/oder das Mol-Verhältnis von Naphthalinsulfonsäure:Formaldehyd:stickstoffhaltigem Formulierungshilfsmittel 1:0,7 bis 3,0:0,01 bis 1,5 beträgt.

Entgegen allen Erwartungen wurde bei den lagerstabilen sulfonierten Kondensationsprodukten gemäß Erfindung neben der gewünschten Temperaturstabilität auch festgestellt, dass die für diese Produktklasse bisher typischen und unerwünschten Ausgasungen an Formaldehyd und/oder Ammoniak drastisch reduziert waren. Dieser Effekt war in dieser Deutlichkeit nicht vorhersehbar.

Bzgl. der Komponenten der lagerstabilen sulfonierten Kondensationsprodukte sieht die Erfindung als Aminoplastbildner Melamin und/oder Harnstoff vor. Diese können bis zu 70 Gew.-% durch Thioharnstoff, Dicyandiamid, ein Guanidin(-Salz) und Mischungen daraus ersetzt werden, wobei allerdings Bereiche von 30 bis 50 Gew.-% zu bevorzugen sind.

N-Methyl-Harnstoff, 2-Imidazolidinon und/oder Anthranilsäureamid sind im Sinne der Erfindung typische organische Formulierungshilfsmittel.

Das stickstoffhaltige Formulierungshilfsmittel kann gegebenenfalls teilweise in das Kondensat aus Aminoplastbildner, Formaldehyd und Sulfit-Komponente eingebaut oder an dieses angelagert sein.

Für bestimmte Anwendungsfälle hat es sich als vorteilhaft erwiesen, die Kondensationsprodukte als wässrige Lösungen einzusetzen, wofür wässrige Lösungen mit einem Feststoffgehalt von 20 bis 60 Gew.-% besonders geeignet sind, deren Viskosität bei 95°C zwischen 0,5 und 250 mm^{2- ·} s⁻¹ liegt. Andererseits können die Kondensationsprodukte auch als trockene Produkte mit einem Restfeuchtegehalt < 5 % (Gew/Gew) eingesetzt werden.

Neben den lagerstabilen sulfonierten Kondensationsprodukten selbst beansprucht die vorliegende Erfindung auch Verfahren zu deren Herstellung, wobei man
a) den oder die Aminoplastbildner, Formaldehyd und die Sulfit-Komponente im Molverhältnis 1:1,9 bis 6,0:1,0 bis 2,0 in wässriger Lösung unter Zusätz einer Teilmenge 1 der gewählten Molmenge des Formulierungshilfsmittels bei einer Temperatur von 40°C bis 90°C und einem pH-Wert zwischen 7,5 und 13,0 so lange erhitzt, bis kein Sulfit mehr nachweisbar ist,
b) danach eine Teilmenge 2 der gewählten Molmenge des Formulierungshilfsmittels bei einem pH-Wert zwischen 3,0 und 7,0 zugibt und bei einer Temperatur von 60 bis 95°C die Kondensation so lange fortsetzt, bis das Kondensationsprodukt bei 95 ° C eine Viskosität von 1 bis 250 mm^{2 ·} s⁻¹ aufweist,
c) anschließend das Kondensationsprodukt auf einen pH-Wert von 7,5 bis 12,0 einstellt oder eine thermische Nachbehandlung bei einem pH-Wert ≥ 10,0 und einer Temperatur von 65 bis 90°C durchführt und
d) abschließend eine Teilmenge 3 der gewählten Molmenge des Formutierungshilfsmittels zugibt,
wobei die Summe aus Teilmenge 1, Teilmenge 2 und Teilmenge 3 des Formulierungshilfsmittels der Molmenge des Formulierungshilfsmittels der Formel (I) und/oder (II) entspricht und wobei jede einzelne Teilmenge einen Anteil von 0 bis 100 Summen-% ausmachen kann, mit der Maßgabe, dass die Teilmenge 1 < 100 % und vorzugsweise < 99 % bzw. besonders bevorzugt < 90 % ist.

Dieses Verfahren sieht desweiteren die Trocknung der so erhaltenen Kondensationsprodukte auf einen bevorzugten Restfeuchtegehalt < 5 % vor, was vorzugsweise durch Verdampfen des Wassers im Vakuum, in einem Sprühtrockner oder auf einem Walzentrockner erfolgen sollte.

Als alternatives Herstellungsverfahren für die beanspruchten Kondensationsprodukte wird vorgeschlagen, sulfonierte Melamin-Formaldehyd-Kondensationsprodukte, sulfonierte Melamin-Harnstoff-Formaldehyd-Kondensationsprodukte oder Naphthalinsulfonsäure-Formaldehyd-Kondensationsprodukte mit 0,1 bis 50 Gew.-%, bezogen auf den Gehalt an festen Wirkstoffen, eines Formulierungshilfsmittels der oben definierten Formeln (I) und/oder (II) oder Mischungen daraus zu versetzen und gegebenenfalls auf eine Restfeuchte < 5 % zu trocknen.

Verwendung finden diese lagerstabilen sulfonierten Kondensationsprodukte entweder als Zusatzmittel für anorganische Bindemittel, wie z. B. Zement, Kalk, Gips, CaSO₄-Halbhydrate und Anhydrite in einer Menge von 0,01 bis 20 Gew.-% bezogen auf die Menge der eingesetzten anorganischen Bindemittel oder aber als Zusatzmittel für hydraulisch abbindende Trockenmischungen, die ihrerseits anorganische Bindemittel enthalten, wobei Mengen zwischen 0,01 und 20 Gew.-% bezogen auf die Menge der eingesetzten anorganischen Bindemittel bevorzugt werden.

Insgesamt stellen die lagerstabilen sulfonierten Kondensationsprodukte gemäß Erfindung einen deutlichen Fortschritt hinsichtlich der thermischen Stabilität dieser Kondensationsprodukte dar und tragen darüber hinaus den gesteigerten Anforderungen an umweltschonende Produkte Rechnung.

Die nachfolgenden Beispiele verdeutlichen diese Vorteile der erfindungsgemäßen Kondensationsprodukte.

### Beispiele

### Beispiel 1: (Vergleich, ohne Formulierungshilfsmittel)

In einem Rundkolben wurden 332,1 g Formalin (30 %ig), 156,5 g Wasser und 0,6 g einer 20 %igen wässrigen Natronlauge vorgelegt. Anschließend wurden 126,0 g Melamin eingetragen, die Lösung auf 30°C erwärmt und 121,3 g Natrium-Pyrosulfit sowie 16,5 g einer 20 %igen NaOH zugegeben und bei 80°C bis zum vollständigen Sulfiteinbau erhitzt.
Nach dem vollständigen Sulfiteinbau wurden 56,0 g H₂SO₄ (10 %ig) zugegeben und dann bei 80°C bis zu einer Viskosität von 9,1 cSt kondensiert; abschließend wurden 66,5 g einer 20 %igen Natronlauge zugegeben und auf Raumtemperatur (RT) abgekühlt.

Die fertige Lösung zeigte folgende physikalische Daten:

| | |
|---|---|
| Feststoffgehalt | 40,7 Gew.-% |
| Viskosität | 3,40 cSt (20°C) |
| pH-Wert | 12,0 |
| HCHO_{frei} | 0,40 % |

Diese Lösung wurde im Sprühtrockner zu einem farblosen Pulver getrocknet; HCHO_{frei}-Gehalt des Pulvers nach dem Trocknen: 0,22 %.

### Erfindungsbeispiele: (mit Formulierungshilfsmittel)

### Beispiel 2:

In einem Rundkolben wurden 332,1 g Formalin (30 %ig), 156,5 g Wasser und 0,6 g einer 20 %igen wässrigen Natronlauge vorgelegt. Anschließend wurden 126,0 g Melamin eingetragen, die Lösung auf 30°C erwärmt und 121,3 g Natrium-Pyrosulfit und 16,5 g einer 20 %igen wässrigen Natronlauge zugegeben und bei 80°C bis zum vollständigen Sulfiteinbau erhitzt.

Nach dem vollständigen Sulfiteinbau wurden 13,6 g Anthranilsäure-Amid und 37,0 g N-Methylharnstoff sowie 56,0 g H₂SO₄ (10 %ig) und 25,3 g Wasser zugegeben und bei 80°C bis zu einer Viskosität von 9,1 cSt kondensiert; abschließend wurden 20,9 g einer 20 %igen Natronlauge zugegeben und auf RT abgekühlt.

Die fertige Lösung zeigte folgende physikalische Daten:

| | |
|---|---|
| Feststoffgehalt | 43,8 Gew.-% |
| Viskosität | 2,89 cSt (20°C) |
| pH-Wert | 12,1 |
| HCHO_{frei} | 0,27 % |

Diese Lösung wurde im Sprühtrockner zu einem farblosen Pulver getrocknet; HCHO_{frei}-Gehalt des Pulvers nach dem Trocknen: 0,19 %.

### Beispiel 3:

In einem Rundkolben wurden 332,1 g Formalin (30 %ig), 156,5 g Wasser und 0,6 g einer 20 %igen wässrigen Natronlauge vorgelegt. Anschließend wurden 126,0 g Melamin eingetragen, die Lösung auf 30°C erwärmt und 121,3 g Natrium-Pyrosulfit sowie 16,5 g einer 20 %igen wässrigen Natronlauge zugegeben und bei 80°C bis zum vollständigen Sulfiteinbau erhitzt.

Nach dem vollständigen Sulfiteinbau wurden 56,0 g H₂SO₄ (10 %ig) zugegeben und bei 80°C bis zu einer Viskosität von 9,1 cSt kondensiert; danach wurden 13,6 g Anthranilsäure-Amid, 25,8 g 2-Imidazolidinon sowie 20,1 g Wasser zugegeben und die Lösung mit 14,7 g einer 20 %igen Natronlauge alkalisch gestellt und auf RT abgekühlt.

Die fertige Lösung zeigte folgende physikalische Daten:

| | |
|---|---|
| Feststoffgehalt | 43,1 Gew.-% |
| Viskosität | 3,10 cSt (20°C) |
| pH-Wert | 11,3 |
| HCHO_{frei} | 0,10 % |

Diese Lösung wurde im Sprühtrockner zu einem farblosen Pulver getrocknet; HCHO_{frei}-Gehalt des Pulvers nach dem Trocknen: 0,08 %.

### Beispiel 4:

In einem Rundkolben wurden 332,1 g Formalin (30 %ig), 156,5 g Wasser und 0,6 g einer 20 %igen wässrigen Natronlauge vorgelegt. Anschließend wurden 126,0 g Melamin eingetragen, die Lösung auf 30°C erwärmt und 121,3 g Natrium-Pyrosulfit und 16,5 g einer 20 %igen wässrigen Natronlauge sowie 37,0 g N-Methylharnstoff, 76,1 g Thioharnstoff und 150,6 g Wasser zugegeben und bei 80° C bis zum vollständigen Sulfiteinbau erhitzt.

Nach dem vollständigen Sulfiteinbau wurden 56,0 g H₂SO₄ (10 %ig) zugegeben und bei 80°C bis zu einer Viskosität von 3,9 cSt kondensiert; abschließend wurden 22,2 g einer 20 %igen Natronlauge zugegeben und auf RT abgekühlt.

Die fertige Lösung zeigte folgende physikalische Daten:

| | |
|---|---|
| Feststoffgehalt | 41,8 Gew.-% |
| Viskosität | 2,53 cSt (20°C) |
| pH-Wert | 12,3 |
| HCHO_{frei} | 0,08 % |

Diese Lösung wurde im Sprühtrockner zu einem farblosen Pulver getrocknet; HCHO_{frei}-Gehalt des Pulvers nach dem Trocknen: 0,07 %.

### Beispiel 5:

In einem Rundkolben wurden 332,1 g Formalin (30 %ig), 156,5 g Wasser und 0,6 g einer 20 %igen wässrigen Natronlauge vorgelegt. Anschließend wurden 126,0 g Melamin eingetragen, die Lösung auf 30°C erwärmt und 121,3 g Natrium-Pyrosulfit und 16,5 g einer 20 %igen Natronlauge sowie 37,0 g N-Methylharnstoff, 19,0 g Thioharnstoff und 92,8 g Wasser zugegeben und bei 80°C bis zum vollständigen Sulfiteinbau erhitzt.
Nach dem vollständigen Sulfiteinbau wurden 56,0 g H₂SO₄ (10 %ig) zugegeben und bei 80°C bis zu einer Viskosität von 5,3 cSt kondensiert; abschließend wurden 15,8 g einer 20 %igen Natronlauge zugegeben und auf RT abgekühlt.

Die fertige Lösung zeigte folgende physikalische Daten:

| | |
|---|---|
| Feststoffgehalt | 40,5 Gew.-% |
| Viskosität | 2,84 cSt (20°C) |
| pH-Wert | 12,0 |
| HCHO_{frei} | 0,10 % |

Diese Lösung wurde im Sprühtrockner zu einem farblosen Pulver getrocknet; HCHO_{frei}-Gehalt des Pulvers nach dem Trocknen: 0,11 %.

Im Folgenden wurden die Eigenschaften der Harz-haltigen Lösungen und der daraus jeweils hergestellten Pulver in einer *α*-Halbhydrat-Umgebung gegenübergestellt:

| | | |
|---|---|---|
| Grundrezeptur | 50,0 g | α-Halbhydrat |
| | 16,0 g | Wasser |
| | 0,180 g | des jeweiligen Aminoplastharzes (als Feststoff gerechnet) |

### Durchführung:

Die verflüssigten Gipsschlämme wurden aus dem Anrührbecher in einem einzigen Durchgang auf eine Glasplatte gegossen; nach Bestimmung des Fließmaßes (FM) wurde mit der Vicat-Nadel ca. 1 cm vom Rand des Gipskuchens entfernt der Verlauf des Ansteifens gemessen.

| Ergebnisse: | | | | | |
|---|---|---|---|---|---|
| Beispiele | als Lösung | | als Pulver | | ΔtAnsteifen [min] |
| | FM[cm] | Ansteifen [min] | FM[cm] | Ansteifen [min] | |
| 1 (Vergleich) | 10,2 | 35 | 10,6 | 43 | 8 |
| 2 | 8,8 | 33 | 8,7 | 35 | 2 |
| 3 | 9,9 | 41 | 9,3 | 41 | 0 |
| 4 | 9,5 | 35 | 9,6 | 33 | -2 |
| 5 | 9,8 | 35 | 9,9 | 33 | -2 |

Man erkennt, dass bei den Erfindungsbeispielen 2 bis 4 das Ansteifen der Gips-Masse auch nach der Sprühtrocknung der Lösung zum Pulver im Rahmen der Meßgenauigkeit unverändert bleibt, wohingegen Beispiel 1 (Vergleich) ohne erfindungsgemäßen Zusatz eines Formulierungshilfsmittels eine deutlich verlängerte Ansteifzeit zeigt.

Das gleiche signifikante Ergebnis ergibt sich bzgl. der Veränderung der HCOH_{frei}-Werte nach der Trocknung (s. o. Beispiel 1 bis 5). Bei Beispiel 1 (Vergleich) findet ein relativ starker Abbau des nicht abreagierten Formaldehyds statt, wobei die Harze der Erfindungsbeispiele 2 bis 4 eine hervorragende thermische Stabilität bei der Trocknung aufweisen.

## Patentansprüche

1. Lagerstabile sulfonierte Kondensationsprodukte auf Basis eines Aminoplastbildners mit mindestens zwei Aminogruppen und Sulfit und/oder Naphthalinsulfonsäure sowie Formaldehyd und ggf. organischen Stickstoffbasen, wobei der Aminoplastbildner ausgewählt ist aus Melamin und/oder Harnstoff und gegebenen falls bis zu 70 Gew.-% durch Thioharnstoff, Dicyandiamid, eine Guanidin(-Salz) und Mischungen daraus ersetzt wird,
**dadurch gekennzeichnet,**
**dass** sie mindestens ein stickstoffhaltiges Formulierungshilfsmittel ausgewählt aus Verbindungen der allgemeinen Formel (I)
R¹-NH-X-Y-R²
worin
R¹ = -CH₃, -C₂H₅, -C₃H₇,
R² = H, -CH₃, -C₂H₅, -C₃H₇ oder
R¹ und R² gemeinsam -(CH₂)ₙ-CH₂-
X = -CH₂⁻, CO, CS
Y = S, NH, -(CH₂)ₘ-
n = 0 bis 9
m = 1 bis 4 ist;
und/oder Verbindungen der allgemeinen Formel (II) 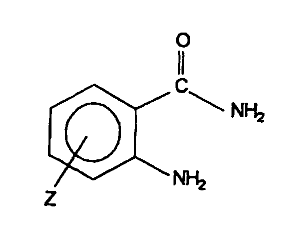 worin
Z = -OCH₃, -SO₃H, -SO₃^{-M+}, -NO₂, -NH₂, -NH-NH₂, -CO₂^{-M+}, -CHO, H,
M = Kation ist
enthalten und dass das Mol-Verhälnis von Aminoplastbildner: Formaldehyd:Sulfit:stickstoffhaltigem Formulierungshilfsmittel 1:1,9 bis 6,0:1,0 bis 2,0:0,01 bis 1,5 und/oder das Mol-Verhältnis von Naphthatinsulfonsäure:Formaldehyd:stickstoffhaltigem Formulierungshilfsmittel 1:0,7 bis 3,0:0,01 bis 1,5 beträgt.

2. Kondensationsprodukte nach Anspuch 1,
**dadurch gekennzeichnet,**
**dass** sie als Formulierungshilfsmittel N-Methylharnstoff, 2-Imidazolidinon und/oder Anthranilsäureamid enthalten.

3. Kondensationsprodukte nach einem der Ansprüche 1 und 2,
**dadurch gekennzeichnet,**
**dass** sie als wässrige Lösung mit einem Feststoffgehalt von 20 bis 60 Gew.-% vorliegen.

4. Kondensationsprodukte nach Anspruch 3,
**dadurch gekennzeichnet,**
**dass** die Viskosität der wässrigen Lösung bei 95 °C zwischen 0,5 und 250 mm^{2- ·} s⁻¹ liegt.

5. Kondensationsprodukte nach einem der Ansprüche 1 und 2,
**dadurch gekennzeichnet,**
**dass** sie auf einen Restfeuchtegehalt < 5 % getrocknet sind.

6. Verfahren zur Herstellung eines Kondensationsproduktes nach einem der Ansprüche 1 bis 5,
**dadurch gekennzeichnet,**
**dass** man
a) den oder die Aminoplastbildner, Formaldehyd und die Sulfit-Komponente im Molverhältnis 1:1,9 bis 6,0:1,0 bis 2,0 in wässriger Lösung unter Zusatz einer Teilmenge 1 der gewählten Molmenge des Formulierungshilfsmittels bei einer Temperatur von 40 °C bis 90 °C und einem pH-Wert zwischen 7,5 und 13,0 so lange erhitzt, bis kein Sulfit mehr nachweisbar ist,
b) danach eine Teilmenge 2 der gewählten Molmenge des Formulierungshilfsmittels bei einem pH-Wert zwischen 3,0 und 7,0 zugibt und bei einer Temperatur von 60 bis 95 °C die Kondensation so lange fortsetzt, bis das Kondensationsprodukt bei 95 °C eine Viskosität von 1 bis 250 mm^{2 ·} s⁻¹ aufweist,
c) anschließend das Kondensationsprodukt auf einen pH-Wert von 7,5 bis 12,0 einstellt oder eine thermische Nachbehandlung bei einem pH-Wert ≥ 10,0 und einer Temperatur von 65 bis 90 °C durchführt und
d) abschließend eine Teilmenge 3 der gewählten Molmenge des Formulierungshilfsmittels zugibt,
wobei die Summe aus Teilmenge 1, Teilmenge 2 und Teilmenge 3 des Formulierungshilfsmittels der Molmenge des Formulierungshilfsmittels der Formel (I) und/oder (II) entspricht und wobei jede einzelne Teilmenge einen Anteil von 0 bis 100 Summen-% ausmachen kann, mit der Maßgabe, dass die Teilmenge 1 < 100 % ist.

7. Verfahren nach Anspruch 6,
**dadurch gekennzeichnet,**
**dass** die Kondensationsprodukte durch Verdampfen des Wassers im Vakuum, in einem Sprühtrockner oder auf einem Walzentrockner auf einen bevorzugten Restfeuchtegehalt < 5 % getrocknet werden.

8. Verfahren zur Herstellung eines Kondensationsproduktes nach einem der Ansprüche 1 bis 5,
**dadurch gekennzeichnet,**
**dass** man sulfonierte Melamin-Formaldehyd-Kondensationsprodukte, sulfonierte Melamin-Harnstoff-Formaldehyd-Kondensationsprodukte oder Naphthalinsulfonsäure-Formaldehyd-Kondensationsprodukte mit 0,1 bis 50 Gew.-%, bezogen auf den Gehalt an festen Wirkstoffen, eines Formulierungshilfsmittels der Formel (I) und/oder (II) oder Mischungen daraus versetzt und auf eine Restfeuchte < 5 % trocknet.

9. Verwendung der Kondensationsprodukte nach einem der Ansprüche 1 bis 5 als Zusatzmittel für anorganische Bindemittel in einer Menge von 0,01 bis 20 Gew.-%, bezogen auf die Menge der eingesetzten anorganischen Bindemittel.

10. Verwendung der Kondensationsprodukte nach einem der Ansprüche 1 bis 5 als Zusatzmittel für hydraulisch abbindende Trockenmischungen, die anorganische Bindemittel enthalten, in einer Menge von 0,01 bis 20 Gew.-%, bezogen auf die Menge der eingesetzten anorganischen Bindemittel.

## Claims

1. Sulphonated condensation products which are stable in storage and are based on an aminoplast former containing at least two amino groups and sulphite and/or naphthalenesulphonic acid as well as formaldehyde and optionally organic nitrogen bases, said aminoplast former being selected from melamine and/or urea and optionally up to 70 % by weight thereof being replaced by thiourea, dicyandiamide, a guanidine (salt) and mixtures thereof,
**characterized in that**
they contain at least one nitrogen-containing formulation auxiliary selected from compounds of the general formula (I)
R¹-NH-X-Y-R²
in which
R¹ = -CH₃, -C₂H₅, -C₃H₇,
R² = H, -CH₃, -C₂H₅, -C₃H₇ or
R¹ and R² together denote -(CH₂)ₙ-CH₂-
X = -CH₂-, CO, CS
Y = S, NH, -(CH₂)ₘ-
n = 0 to 9
m = 1 to 4;
and/or compounds of the general formula (II) 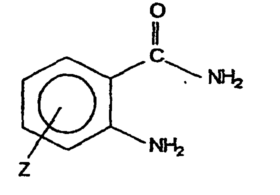 in which
Z = -OCH₃, -SO₃H, -SO₃^{-M+}, -NO₂, -NH₂, -NH-NH₂, -CO₂^{-M+}, -CHO, H,
M = is a cation
and **in that** the molar ratio of aminoplast former : formaldehyde: sulphite: nitrogen-containing formulation auxiliary is 1 : 1.9 to 6.0 : 1.0 to 2.0 : 0.01 to 1.5 and/or the molar ratio of naphthalenesulphonic acid : formaldehyde: nitrogen-containing formulation auxiliary is 1 : 0.7 to 3.0 : 0.01 to 1.5.

2. Condensation products as claimed in claim 1,
**characterized in that**
they contain N-methylurea, 2-imidazolidinone and/or anthranilamide as formulation auxiliaries.

3. Condensation products as claimed in one of the claims 1 and 2,
**characterized in that**
they are present as an aqueous solution having a solids content of 20 to 60 % by weight.

4. Condensation products as claimed in claim 3,
**characterized in that**
the viscosity of the aqueous solution at 95°C is between 0.5 and 250 mm²·s⁻¹.

5. Condensation products as claimed in one of the claims 1 and 2,
**characterized in that**
they are dried to a residual moisture content of < 5 %.

6. Process for producing a condensation product as claimed in one of the claims 1 to 5,
**characterized in that**
a) the aminoplast former or formers, formaldehyde and the sulphite component are heated in a molar ratio of 1 : 1.9 to 6.0 : 1.0 to 2.0 in an aqueous solution with addition of a portion 1 of the selected molar amount of the formulation auxiliary at a temperature of 40° to 90°C and a pH between 7.5 and 13.0 until sulphite is no longer detectable,
b) subsequently a portion 2 of the selected molar amount of the formulation auxiliary is added at a pH between 3.0 and 7.0 and the condensation is continued at a temperature of 60 to 95°C until the condensation product has a viscosity of 1 to 250 mm²·s⁻¹ at 95°C,
c) afterwards the condensation product is adjusted to a pH of 7.5 to 12.0 and a thermal after-treatment is carried out at a pH of ≥ 10.0 and a temperature of 65 to 90°C and
d) finally a portion 3 of the selected molar amount of the formulation auxiliary is added,
where the sum of portion 1, portion 2 and portion 3 of the formulation auxiliary corresponds to the molar amount of the formulation auxiliary of formula (I) and/or (II) and each individual portion can amount to a portion of 0 to 100 % of the total provided that portion 1 is < 100 %.

7. Process as claimed in claim 6,
**characterized in that**
the condensation products are dried to a preferred residual moisture content of < 5 % by evaporating the water in a vacuum, in a spray drier or a drum drier.

8. Process for the production of a condensation product as claimed in one of the claims 1 to 5,
**characterized in that**
0.1 to 50 % by weight based on the content of solid active substances of a formulation auxiliary of formula (I) and/or (II) or mixtures thereof is added to sulphonated melamine-formaldehyde condensation products, sulphonated melamine-urea-formaldehyde condensation products or naphthalenesulphonic acid-formaldehyde condensation products and dried to a residual moisture content of < 5 %.

9. Use of the condensation products as claimed in one of the claims 1 to 5 as additives for inorganic binders in an amount of 0.01 to 20 % by weight based on the amount of the inorganic binders that are used.

10. Use of condensation products as claimed in one of the claims 1 to 5 as additives for hydraulically setting dry mixes containing inorganic binders, in an amount of 0.01 to 20 % by weight based on the amount of inorganic binders that are used.

## Revendications

1. Produits de condensation sulfonés stables au stockage à base d'un précurseur d'aminoplaste avec au moins deux groupes amino et de sulfite et/ou d'acide naphtalènesulfonique ainsi que de formaldéhyde et éventuellement des bases organiques azotées, dans lesquels le précurseur d'aminoplaste est choisi parmi la mélamine et/ou l'urée et est remplacé éventuellement par jusqu'à 70 % en poids par la thiourée, le dicyandiamide, la guanidine (un sel de guanidine) et leur mélanges,
**caractérisés en ce qu'**ils contiennent au moins un adjuvant de formulation azoté choisi parmi les composés de formule générale (I)
R¹-NH-X-Y-R²
dans laquelle
R¹ représente -CH₃, -C₂H₅, -C₃H₇,
R² représente H, -CH₃, -C₂H₅, -C₃H₇ ou
R¹ et R² représentent ensemble -(CH₂)ₙ-CH₂-
X représente -CH₂-, CO, CS
Y représente S, NH, -(CH₂)ₘ-
n est 0 à 9
m est 1 à 4 ;
et/ou les composés de formule générale (II) 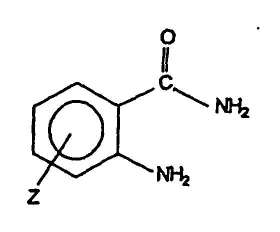 dans laquelle
Z est -OCH₃, -SO₃H, -SO₃^{-M+}, -NO₂, -NH₂, -NH-NH₂, -CO₂^{-M+}, -CHO, H,
M est un cation, et **en ce que** le rapport en moles de précurseur d'aminoplaste :
formaldéhyde : sulfite : adjuvant de formulation azoté est de 1 : 1,9 à 6,0 : 1,0 à 2,0 : 0,01 à 1,5 et/ou le rapport en moles d'acide naphtalènesulfonique : formaldéhyde : adjuvant de formulation azoté est de 1 : 0,7 à 3,0 : 0,01 à 1,5.

2. Produits de condensation selon la revendication 1, **caractérisé en ce qu'**ils contiennent comme adjuvant de formulation la N-méthylurée, 2-imidazolidinone et ou l'anthranilamide.

3. Produits de condensation selon l'une des revendications 1 et 2, **caractérisés en ce qu'**ils se présentent sous la forme de solution aqueuse avec une teneur en matières solides de 20 à 60 % en poids.

4. Produits de condensation selon la revendication 3, **caractérisés en ce que** la viscosité de la solution aqueuse à 95 °C se situe entre 0,5 et 250 mm²·s⁻¹.

5. Produits de condensation selon l'une des revendications 1 et 2, **caractérisés en ce qu'**ils sont séchés à une teneur résiduelle en humidité < 5 %.

6. Procédé de préparation d'un produit de condensation selon l'une des revendications 1 à 5, **caractérisé en ce que** l'on
a) chauffe le ou les précurseurs d'aminoplaste, le formaldéhyde et le composant sulfite dans le rapport molaire 1 : 1,9 à 6,0 : 1,0 à 2,0 en solution aqueuse en ajoutant une quantité partielle 1 de la quantité molaire choisie de l'adjuvant de formulation à une température de 40 °C à 90 °C et une valeur de pH entre 7,5 et 13,0, jusqu'à ce que du sulfite ne soit plus détectable,
b) on ajoute ensuite une quantité partielle 2 de la quantité molaire choisie de l'adjuvant de formulation à une valeur de pH entre 3,0 et 7,0 et on poursuit la condensation à une température de 60 à 95 °C jusqu'à ce que le produit de condensation présente à 95 °C une viscosité de 1 à 250 mm²·s⁻¹,
c) on ajuste ensuite le produit de condensation à une valeur de pH de 7,5 à 12,0 ou on effectue un post-traitement thermique à une valeur de pH ≥ 10,0 et une température de 65 à 90 °C et
d) on ajoute ensuite une quantité partielle 3 de la quantité molaire choisie de l'adjuvant de formulation,
la somme de la quantité partielle 1, la quantité partielle 2 et de la quantité partielle 3 de l'adjuvant de formulation correspond à la quantité molaire de l'adjuvant de formulation de formule (II) et/ou (III) et chaque quantité partielle individuelle pouvant représenter une proportion de 0 à 100 % de la somme, sous réserve que la quantité partielle 1 soit < 100 %.

7. Procédé selon la revendication 6, **caractérisé en ce que** l'on sèche les produits de condensation par évaporation de l'eau sous vide, dans un sécheur par pulvérisation ou sur un séchoir à tambour à une teneur en humidité résiduelle préférée < 5 %.

8. Procédé pour la préparation d'un produit de condensation selon l'une des revendications 1 à 5, **caractérisé en ce que** l'on ajoute à des produits de condensation sulfonés mélamine-formaldéhyde, des produits de condensation sulfonés mélamine urée-formaldéhyde ou des produits de condensation acide naphtalènesulfonique-formaldéhyde 0,1 à 50 % en poids, par rapport au poids de substances actives solides, d'un adjuvant de formulation de formule (I) et/ou (II) ou de mélanges de ceux-ci et on sèche à une humidité résiduelle < 5 %.

9. Utilisation des produits de condensation selon l'une des revendications 1 à 5 comme additif pour des liants inorganiques en une quantité de 0,01 à 20 % en poids, par rapport à la quantité de liant inorganique mis en oeuvre.

10. Utilisation des produits de condensation selon l'une des revendications 1 à 5 comme adjuvant pour des mélanges secs à prise hydraulique, qui contiennent des liants inorganiques, en une quantité de 0,01 à 20 % en poids, par rapport à la quantité de liant inorganique mise en oeuvre.
